# EUROPÄISCHE PATENTSCHRIFT

(11) **EP 0 787 331 B1**
(45) Veröffentlichungstag und Bekanntmachung des Hinweises auf die Patenterteilung: **11.07.2001**
(21) Anmeldenummer: 95929773.0
(22) Anmeldetag: 07.09.1995
(51) Int. Cl.: G06F 17/60, G07G 1/00

(54) **JOURNALSPEICHER**
JOURNAL STORE
MEMOIRE DE JOURNAL

(30) Priorität: 19.10.1994 DE 4437460
(43) Veröffentlichungstag der Anmeldung: 06.08.1997
(73) Patentinhaber: Wincor Nixdorf GmbH & Co KG, 33106 Paderborn (DE)
(72) Erfinder: BECKER, Klaus, D-13465 Berlin (DE); BÄUERLE, Ralph, D-13585 Berlin (DE)
(86) Internationale Anmeldenummer: DE9501221
(87) Internationale Veröffentlichungsnummer: WO9613012

(56) Entgegenhaltungen:
- EP-A- 0 180 978
- US-A- 4 611 205
- US-A- 5 139 562

## Beschreibung

### Technisches Gebiet

Die Erfindung betrifft den Anschluß von elektronischen Journalspeichern.

### Stand der Technik

Bei der Verwendung von computergesteuerten Registrierkassen wird ein Journal benötigt, auf dem die getätigten Umsätze dokumentiert und für steuerliche Zwecke aufgezeichnet werden. Dieses Journal muß so gestaltet sein, daß einmal eingetragene Daten nicht mehr gelöscht werden können.

Anstelle von bislang verwendeten Papierstreifen ist ein elektrisches Journal wünschenswert, das weniger Platz beansprucht, keine mechanischen Teile hat und dessen Daten automatisch weiterverarbeitet werden können.

Ein derartiger Speicher wird als steckbarer Speicher in der Patentschrift US 4 611 205 gezeigt.

EP 180 978 A offenbart eine Registrierkasse mit einem steckbaren nichtflüchtigen Speicher (EPROM) zur Aufzeichnung von Tagesumsätzen.

Geräte mit elektronischem Journal haben jedoch den Nachteil, daß, sofern diese zertifiziert sein müssen, jede Änderung an der Betriebssoftware oder -hardware eine erneute Zertifizierung verlangt.

Es ist daher Aufgabe der Erfindung, eine fälschungsgeschützte Aufzeichnungsvorrichtung bei Belegausgaben anzugeben, bei der eine Zertifizierung allein der Aufzeichnungsvorrichtung ausreichend ist.

### Darstellung der Erfindung

Die Erfindung löst diese Aufgabe dadurch, daß das Journal zwischen Datenverarbeitungseinrichtung und Belegdrucker geschaltet ist, anstatt wie bisher als zweite Ausgabeeinrichtung parallel zum Belegdrucker angeschlossen zu sein.

### Kurzbeschreibung der Zeichnungen

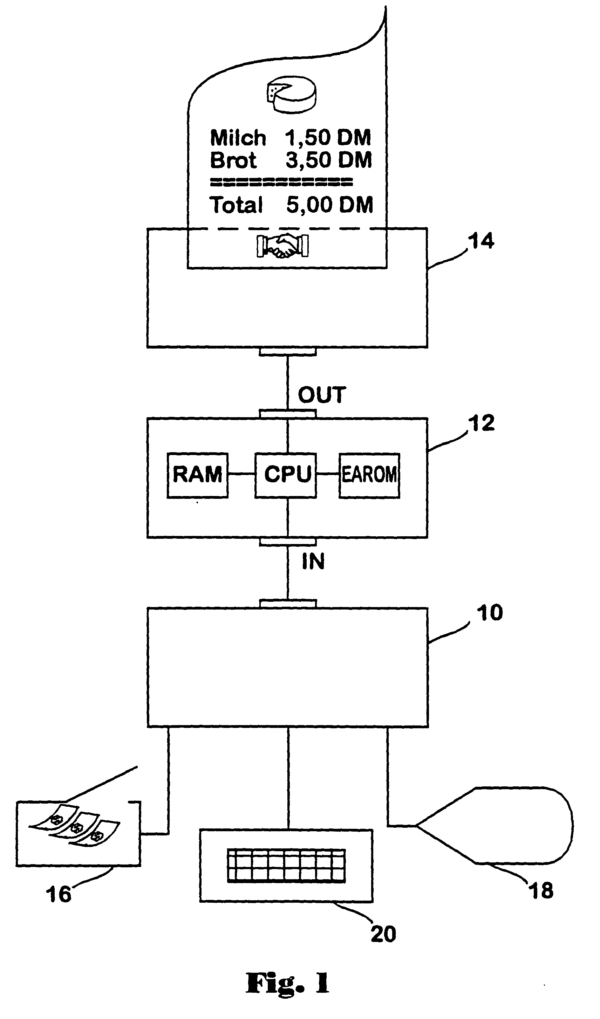

Es zeigt
- Fig. 1: ein Blockschaltbild für den Betrieb einer erfindungsgemäßen Aufzeichnungsvorrichtung.

### Detaillierte Beschreibung der Erfindung

Die Erfindung wird an Hand einer Anwendung in einer elektronischen Kasse beschrieben. Eine Aufzeichnungsvorrichtung der gattungsgemäßen Art wird hier häufig als Journal bezeichnet. Im folgenden wird daher zwecks besserer Lesbarkeit die Bezeichnung Journal für eine Aufzeichnungsvorrichtung der erfindungsgemäßen Ausführung verwendet.

In Fig. 1 ist das Blockschaltbild einer Registrierkasse gezeigt. Eine datenverarbeitende Zentraleinheit 10 betreibt einen angeschlossenen Bildschirm oder ähnliche visuelle Anzeige, eine Tastatur 20 und eine elektrisch öffenbare Kassenlade 16. Zu verkaufende Positionen werden durch die Tastatur 20 eingegeben und auf der Anzeige 18 angezeigt. Der Kassiervorgang wird durch eine von der Tastatur 20 eingeleitete Bestimmung der Endsumme begonnen, wodurch auch die Kassenlade geöffnet wird. Die zu verkaufenden Positionen werden gleichzeitig auf dem Belegdrucker 14 mit Preis und Artikelbezeichnung ausgedruckt. Hierzu ist die Zentraleinheit 10 mit dem Belegdrucker 14 verbunden. In herkömmlichen Kassen ist die Zentraleinheit 10 direkt mit dem Belegdrucker 14 verbunden. Ferner ist ein Journal 12 vorhanden, welches in herkömmlicher, nicht dargestellter Ausführung als ein zweiter Drucker oder ein zweites Druckwerk ausgeführt ist, das über eine zusätzliche Schnittstelle direkt mit der Zentraleinheit verbunden ist. In der erfindungsgemäßen Ausführung jedoch ist die Zentraleinheit 10 direkt mit dem Journal 12 verbunden, welches wiederum direkt mit dem Belegdrucker 14 verbunden ist. Vorteilhafterweise hat das Journal 12 dieselbe IN-Schnittstelle wie der Belegdrucker 14, so daß wahlweise auch ein Betrieb der Einrichtung ohne das Journal 12 möglich ist.

Das Journal 12 ist ein elektronisches Journal mit einer eigenen Verarbeitungseinheit CPU, einem netzausfallgeschützen Arbeitsspeicher (CMOS-RAM) und einem Permanentspeicher EAROM. Einheiten dieser Art sind auch in der Ausführung als Chipkarten, z.B. der Typ SLE 44C40 der Fa. Siemens, bekannt. Diese bekannte Chipkarte weist zwar nur eine serielle Schnittstelle auf; eine technisch ähnliche Ausführung mit zwei Schnittstellen zum Senden und Empfangen von Druckdaten ist für jeden Fachmann ohne weiteres herstellbar, ggf. auf Basis von auf Leiterplatten assemblierten Komponenten, die nach abschließendem Test in einem Gehäuse vergossen werden.

Das Journal 12 hat zwei mit IN und OUT bezeichnete Schnittstellen, wobei die IN Schnittstelle mit der Zentraleinheit 10 und die OUT Schnittstelle mit dem Belegdrucker 14 verbunden ist. Der Prozessor CPU empfängt an der IN Schnittstelle für den Belegdrucker bestimmte Daten, analysiert und verarbeitet diese gemäß der nachfolgenden Beschreibung, und gibt ggf. Daten auf der OUT-Schnittstelle aus. Die Schnittstellen IN und OUT sind dabei beispielsweise als serielle Schnittstellen entsprechend dem V24-Standard oder als parallele Schnittstellen für Drucker ausgeführt. Für die Rückgabe von Fehler- und Statusmeldungen werden die bei der jeweiligen Schnittstelle bekannten Verfahren benutzt.

Üblicherweise wird in dem über die Schnittstelle gesendeten Zeichencode zwischen druckbaren Zeichen und Steuerzeichen unterschieden. Druckbare Zeichen werden von dem Drucker ausgegeben, während Steuerzeichen steuernde Funktion wie Zeilenwechsel, Papiervorschub oder Papierabschneiden bewirken. Zur besseren Verarbeitbarkeit werden komplexe Steuerbefehle durch das Steuerzeichen ESC eingeleitet und können danach eine variable Anzahl von auch druckbaren Zeichen enthalten.

Die Funktion des Journals besteht darin, per Steuerbefehl Datensätze entgegenzunehmen und, nach einer Umsetzung, als druckbare Zeichen auf dem Drucker auszugeben. Beispielsweise enthält ein mit ESC eingeleiteter Steuerbefehl für das Journal einen Datensatz, welcher wiederum eine Artikelbezeichnung und einen Preis enthält. Der Preis kann in binär codierter Dezimalschreibweise oder als einzelne Ziffern vorliegen. Beide und weitere Formen können problemlos in eine dem Rechenwerk der CPU zugängliche Form gewandelt werden. Mit Empfang des Datensatzes werden die Artikelbezeichnung und nachfolgend der Preis gedruckt. Bei dem Preis handelt es sich um eine im Journal zu speichernde Größe.

Hierzu besitzt das Journal einen elektrisch veränderbaren, ohne Versorgungsenergie den Inhalt erhaltenden Speicher, wie zum Beispiel einen elektrisch veränderbaren Festwertspeicher EAROM (electrically alterable ROM). Dieser wird bei Inbetriebnahme in eine Anzahl von zu speichernden Feldern aufgeteilt. Das in einem, in Fig. 1 nicht gezeigten, Programmspeicher gespeicherte Programm sucht innerhalb des EAROMs nach dem nächsten unbeschriebenen Feld (durch ein Bit oder den Wert Null markiert) und trägt den zu speichernden Wert ein. Häufig wird dabei auch noch Uhrzeit und Datum eingetragen, welche beispielsweise aus einem autonomen, batteriegepufferten Uhrenbaustein abgerufen wird.

Üblicherweise wird jedoch nicht jeder einzelne Artikel, sondern nur die Endsumme einer Reihe von Transaktionen, beispielsweise der Transaktionen eines Tages, in dem Journal gespeichert. In diesem Fall werden durch die CPU die Teilbeträge einer Transaktion auf summiert und, durch einen Steuerbefehl veranlaßt, die Gesamtsumme gedruckt und in einem Tagestotalisator innerhalb des RAM aufaddiert; der Inhalt dieses Tagestotalisators wird dann z.B. am Ende des Tages, ausgelöst durch einen besonderen Steuerbefehl, im EAROM abgespeichert, wobei ein Protokollausdruck von den abgespeicherten Werten auf dem Drucker-Journal vorgenommen wird. Dabei kann zur Sicherheit der genannte Steuerbefehl die Gesamtsumme enthalten, die in der Zentraleinheit 10 gleichfalls gebildet wurde. Stimmen die beiden Zahlen überein, so erfolgt die Speicherung und eine Zeile mit einem lesbaren Hinweise, z.B. "Gesamtsumme", und dem Betrag wird gedruckt. Stimmen die Zahlen nicht überein, wird eine möglichst auffällige Bemerkung wie "UNGUELTIG!!!" gedruckt, und es erfolgt keine Speicherung.

Um gegen Fälschung besser gesichert zu sein, untersucht die CPU die Artikelbezeichnungen daraufhin, daß diese nicht den Text "Gesamtsumme" enthalten. Sollte dies der Fall sein, wird dieser nicht gedruckt, sondern die weitere Bearbeitung der Transaktion abgebrochen.

Um Eingabefehler korrigieren zu können oder auf entsprechendes Kundenverhalten reagieren zu können, sind anstelle von Datensätzen mit Artikel und Betrag auch solche mit StornoAngaben zulässig. Diese enthalten die Artikelbezeichnung sowie den Betrag und bewirken den Ausdruck einer eindeutigen Nachricht wie "STORNO" und ein Abzug des genannten Betrags von der bislang gebildeten Summe. Es kann auch verlangt werden, daß exakt nur bereits gebuchte Beträge storniert werden können. Hierzu wird im Arbeitsspeicher RAM eine Liste der Buchungen geführt. Dann ist eine Puffereinrichtung vorzusehen, um beim Ausfall der Betriebsspannung die Zwischensummme im EAROM abzuspeichern, wobei dieser Eintrag entsprechend markiert wird, um von normalen Summeneinträgen unterscheidbar zu sein. Wird bei einem Storno ein falscher Betrag genannt, so wird die Transaktion abgebrochen.

Insbesondere erfolgt eine Speicherung der Teilbeträge im Arbeitsspeicher RAM, so daß beim Abbruch einer Transaktion ein automatisches Storno aller bislang gebuchten Beträge auf dem Belegdrucker erfolgen kann, ohne daß hierzu ein Datensatz von der Zentraleinheit 10 gesendet wird, sowie der anschließende Ausdruck von "Gesamtsumme 0 (NULL)" und ein Auswurf und Abschneiden des Bons erfolgt. Damit ist eine Übereinstimmung zwischen auf dem Bondrucker 14 ausgedruckten Belegen und in dem Journal 12 gespeicherten Beträgen sichergestellt, ohne daß hierzu eine besondere Prüfung oder ein Schutz des Programms in der Zentraleinheit gegen Manipulationen notwendig ist.

Der Ausdruck der Gesamtsumme kann ein gesetzliche geschütztes Symbol oder Bezeichnung enthalten, um die Vertrauenswürdigkeit eines Belegs zu erhöhen. Auch kann jeder Journalspeicher mit einer Seriennummer versehen werden, die bei der Gesamtsumme mit ausgedruckt wird. Die Eingabe einer Seriennummer ist nur bis zum Beginn einer ersten Transaktion möglich.

Um gegen ein Entfernen des Journals gesichert zu sein, kann das Journal ohne Kabelverbindung auf den Steckverbinder des Bondruckers 14 aufgesteckt, verschraubt und plombiert werden. Alternativ kann der Drucker so gestaltet sein, daß eine Auftrennung der Verbindung zum Journal 12 oder ein Einschalten zu einem Reset führen, nach dem der Drucker zunächst nicht druckt. Erst eine fälschungsgeschützte Nachricht von dem Journal zum Drucker eröffnet die Möglichkeit des Druckens. Hierzu sind vielfältige Möglichkeiten in dem Schrifttum über Computersicherheit angegeben; vom einfachen Passwort bis zum komplexen Challenge-Response-Verfahren mit kryptographischen Funktionen, wie in der DE 40 08 971 angegeben.

Um den Drucker auch für beispielsweise Diagnoseausgaben oder den Ausdruck von Tagessummen für den Geschäftsinhaber nutzbar zu haben, leitet das Journal alle nicht als Datensätze einer Transaktion erkennbaren Daten an den Drucker weiter. Dabei werden jedoch etwaige Grafikbefehle unterdrückt und Textdaten auf den in dem Summentotal verwendeten Text, hier also "Gesamtsumme", hin untersucht und gegebenenfalls unterdrückt. Auch besteht eine Erweiterung darin, nach jeweils beispielsweise 10 Zeilen oder 300 Zeichen den Text "KEIN BELEG" einzuschieben.

Die Anwendung ist nicht auf Kassen beschränkt, sondern insbesondere in Fällen möglich, wo ein Beleg gedruckt und gleichzeitig ein Nachweis darüber geführt werden muß. Dies kann beispielsweise die Ausgabe von Fahrscheinen in einem Reisebüro sein, wo die Rolle der Zentraleinheit 10 von einem handelsüblichen Personal Computer übernommen und die Schnittstelle die dort verbreitete parallele Druckerschnittstelle sein kann. Als Drucker ist jeder handelsübliche Drucker, der ggf. schon vorhanden ist, verwendbar.

Eine andere Möglichkeit besteht in der Annahme von Kreditkarten. Der gedruckte Beleg wird dem Kunden ausgehändigt und der Betrag gleichzeitig in dem Journal gespeichert. Durch die Zentraleinheit wird eine Belastung beim Kreditkartenunternehmen beispielsweise per Datenfernverarbeitung, möglicherweise erst in der folgenden Nacht, vorgenommen. Falls Transaktionen streitig sind, kann durch Auslesen der Aufzeichnungsvorrichtung ein Nachweis geführt werden.

Dazu ist eine Möglichkeit vorgesehen, den Inhalt des Journals auszulesen. Hierzu sind spezielle Steuerbefehle vorhanden, die den Inhalt des Speichers oder im Befehl spezifizierte Teile davon entweder über einen Rückkanal der IN-Schnittstelle oder über die OUT-Schnittstelle ausgeben. Die Ausführung dieses Teils erfolgt problemlos gemäß dem bekannten Können des Fachmanns auf dem Gebiet der Datenverarbeitung.

## Patentansprüche

1. Aufzeichnungsvorrichtung zur dauerhaften Speicherung von auf einer Belegausgabe (14) auszugebenden Quittungsdaten, wobei
- die Aufzeichnungsvorrichtung (12) einen Eingang (IN) und einen davon getrennten Ausgang (OUT) besitzt und der Eingang (IN) mit einer Datenquelle (10) und der Ausgang (OUT) mit der Belegausgabe (14) verbindbar ist,
- die Aufzeichnungsvorrichtung eine Verarbeitungseinheit (CPU) und einen direkt daran angeschlossenen nichtflüchtigen Speicher (EAROM) enthält, derart, daß nur die Verarbeitungseinheit den nichtflüchtigen Speicher verändern kann,
- die Verarbeitungseinheit (CPU) mit dem Eingang (IN) und dem Ausgang (OUT) verbunden ist und derart ausgeführt ist, daß die Daten vom Eingang zum Ausgang übertragen werden, auf Zeichenfolgen vorbestimmter Form hin untersucht werden und Teile der Zeichenfolgen dieser vorbestimmten Form in dem nichtflüchtigen Speicher abgelegt werden.

2. Aufzeichnungsvorrichtung nach Anspruch 1, wobei die Zeichenfolgen der vorbestimmten Form, von denen Teile im nichtflüchtigen Speicher abgelegt werden, überwiegend aus den abzulegenden Daten bestehen und die Verarbeitungseinheit ein Mittel für die Umwandlung dieser Zeichenfolgen vor der Ausgabe aus dem Ausgang (OUT), insbesondere für eine lesbare Darstellung auf der Belegausgabe (14), enthält.

3. Aufzeichnungsvorrichtung nach Anspruch 2, wobei die Verarbeitungseinheit ein Mittel enthält, das die zu übertragenden Zeichenfolgen daraufhin untersucht, ob eine Ausgabe erzeugt wird, die mit einer bei der Datenspeicherung erzeugten Ausgabe verwechselbar ist, und zutreffendenfalls die Ausgabe der Zeichenfolgen sperrt.

4. Aufzeichnungsvorrichtung nach einer der Ansprüche 1 bis 3, wobei die Verarbeitungseinheit, nachdem eine vorbestimmte Anzahl von Ausgaben über den Ausgang (OUT) ausgegeben wurden, jedoch keine Speicherung in dem nichtflüchtigen Speicher (EAROM) erfolgte, eine zusätzliche Ausgabe an dem Ausgang (OUT) derart erzeugt, daß die bisherigen Ausgaben als nicht im nichtflüchtigen Speicher registrierte Ausgaben gekennzeichnet werden.

5. Betriebsverfahren für eine Aufzeichnungseinheit (12) zur permanenten Speicherung von auf einer Belegausgabe (14) auszugebenden Quittungsdaten, wobei die Aufzeichnungseinheit (12) einen Eingang (IN), einen von dem Eingang verschiedenen Ausgang (OUT) zu der Belegausgabe (14), einen nichtflüchtigen Speicher (EAROM) und eine Steuerschaltung (CPU) aufweist, mit den Merkmalen:
- die Steuerschaltung (CPU) empfängt Zeichen über den Eingang (IN) von einer Datenquelle (10), bestimmt, zu welcher von drei möglichen Formen von Zeichenfolgen die empfangenen Zeichen gehören, und verarbeitet die Zeichen gemäß folgender Vorschrift:
* Zeichenfolgen einer ersten Form werden über den Ausgang (OUT) weitergegeben; zusätzlich jedoch wird ein Teil dieser Zeichenfolgen in dem nichtflüchtigen Speicher (EAROM) gespeichert,
* Zeichenfolgen einer zweiten Form, deren Ausgabe auf der Belegausgabe (14) mit von Zeichenfolgen der ersten Form bewirkten Ausgaben verwechselbar wäre, werden unterdrückt, also nicht über den Ausgang (OUT) an die Belegausgabe (14) weitergegeben, oder unkenntlich gemacht, also soweit verändert, daß sie nicht mehr verwechselbar sind;
* alle sonstigen Zeichenfolgen werden unverändert weitergegeben.

6. Betriebsverfahren nach Anspruch 5, wobei die Zeichenfolgen erster Form überwiegend aus zu speichernden Daten bestehen und diese durch die Aufzeichnungseinheit (12) nach vorbestimmten Formaten aufbereitet, beispielsweise durch festen Text ergänzt, und in der aufbereiteten Form an den Ausgang (OUT) weitergegeben werden.

7. Betriebsverfahren nach Anspruch 5 oder 6, wobei die Aufzeichnungseinheit (12) nach einer vorbestimmten Anzahl von aufeinanderfolgenden Ausgaben sonstiger Zeichenfolgen eine Ausgabe erzeugt, die die davor ausgegebenen Daten als nicht registrierte Daten kennzeichnet.

8. Betriebsverfahren nach einem der Ansprüche 5 bis 7, wobei die Zeichenfolgen erster Form als Datensätze interpretiert werden und
- mehrere Datensätze eine Transaktion umfassen,
- eine Transaktion durch einen Datensatz erster Art begonnen und durch einen Datensatz zweiter Art beendet wird,
- Datensätze dritter Art mindestens ein Datenfeld aufzuzeichnender Daten enthalten,
- Datensätze vierter Art zur Rücknahme/Storno von aufzuzeichnenden Daten aus Datensätzen dritter Art dienen.

9. Betriebsverfahren nach Anspruch 8, wobei die aufzuzeichnenden Daten nicht jeweils einzeln, sondern nur nach Zusammenfassung, insbesondere Aufsummierung, gespeichert werden, sobald ein Datensatz zweiter Art erkannt wird.

10. Betriebsverfahren nach Anspruch 9, wobei der Datensatz zweiter Art die aufzuzeichnende Zusammenfassung enthält und für den Fall, daß der Datensatz mit falschem Inhalt übermittelt wird, mindestens eine einem Datensatz vierter Art entsprechende Ausgabe für die Belegausgabe erzeugt wird, so daß sämtliche Ausgaben auf Grund von seit dem letzten ersten Datensatz übermittelten dritten Datensätzen auf der Belegausgabe als nicht registrierte Daten gekennzeichnet sind.

11. Anordnung nach einer der Ansprüche 1 bis 4, wobei die Aufzeichnungsvorrichtung (12) unmittelbar, kabellos, an die Belegausgabe (14) angeschlossen ist und der Anschluß eine Verriege lung oder Verschraubung besitzt, die plombierbar ist.

## Claims

1. Recording device for the permanent storage of receipt data to be output on a document output means (14),
- the recording device (12) having an input (IN) and an output (OUT) separated therefrom, and its being possible for the input (IN) to be connected to a data source (10) and for the output (OUT) to be connected to the document output means (14), the recording device having a processing unit (CPU) and a non-volatile memory (EAROM) connected directly thereto in such a way that only the processing device can change the non-volatile memory,
- the processing unit (CPU) is connected to the input (IN) and the output (OUT) and designed in such a way that the data are transmitted from the input to the output, are examined for character sequences of predetermined form and parts of the character sequences of this predetermined form are stored in the non-volatile memory.

2. Recording device according to Claim 1, the character sequences of the predetermined form, parts of which are stored in the non-volatile memory, predominantly consisting of the data to be stored, and the processing unit containing a means for converting these character sequences before being output from the output (OUT), in particular for a readable display on the document output means (14).

3. Recording device according to Claim 2, the processing unit containing a means which examines the character sequences to be transmitted to see whether an output will be generated which can be confused with an output generated during the data storage, and, if this applies, blocks the output of the character sequences.

4. Recording device according to one of Claims 1 to 3, the processing unit, after a predetermined number of outputs have been output via the output (OUT) but no storage in the non-volatile memory (EAROM) has taken place, generates an additional output at the output (OUT) in such a way that the previous outputs are identified as outputs that have not been registered in the non-volatile memory.

5. Operating method for a recording unit (12) for the permanent storage of receipt data to be output on a document output means (14), the recording unit (12) having an input (IN), an output (OUT), different from the input, to the document output means (14), a non-volatile memory (EAROM) and a control circuit (CPU), having the features:
- the control circuit (CPU) receives characters via the input (IN) from a data source (10), determine to which of three possible forms of character sequences the received characters belong, and processes the characters in accordance with the following stipulation:
* character sequences of a first form are forwarded via the output (OUT); in addition, however, some of these character sequences are stored in the non-volatile memory (EAROM),
* character sequences of a second form, whose output on the document output means (14) could be confused with outputs effected by character sequences of the first form, are suppressed, that is to say are not forwarded via the output (OUT) to the document output means (14), or are made unrecognizable, that is to say they are changed to such an extent that they can no longer be confused;
* all other character sequences are forwarded unchanged.

6. Operating method according to Claim 5, the character sequences of the first form predominantly consisting of data to be stored and these being prepared by the recording unit (12) in accordance with predetermined formats, for example supplemented by fixed text, and forwarded to the output (OUT) in the prepared form.

7. Operating method according to Claim 5 or 6, the recording unit (12), after a predetermined number of successive outputs of other character sequences, generating an output which identifies the data previously output as non-registered data.

8. Operating method according to one of Claims 5 to 7, the character sequences of the first form being interpreted as data sets and
- a number of data sets comprising a transaction,
- a transaction being started by a data set of a first type and ended by a data set of a second type,
- data sets of a third type containing at least one data field comprising data to be recorded,
- data sets of a fourth type being used to reverse/cancel data to be recorded from data sets of the third type.

9. Operating method according to Claim 8, the data to be recorded not being recorded individually in each case but only after being combined, in particular summed, as soon as a data set of the second type is detected.

10. Operating method according to Claim 9, the data set of the second type containing the combination to be recorded and, in the case in which the data set is transmitted with the wrong contents, at least one output corresponding to a data set of the fourth type being generated for the document output means, so that all the outputs are identified as data which have not been registered because of third data sets on the document output means which have been transmitted since the last first data set.

11. Arrangement according to one of Claims 1 to 4, the recording device (12) being connected directly, without a cable, to the document output means (14), and the connection having a locking means or screw-fitting means which can be sealed with a lead seal.

## Revendications

1. Dispositif d'enregistrement pour la mise en mémoire permanente de données de reçus à émettre sur un dispositif (14) d'émission de document,
- le dispositif (12) d'enregistrement ayant une entrée (IN) et une sortie (OUT) qui en est séparée et l'entrée (IN) pouvant être reliée à une source (10) de données et la sortie (OUT) pouvant être reliée au dispositif (14) d'émission de document,
- le dispositif d'enregistrement contenant une unité (CPU) de traitement et une mémoire (EAROM) non volatile, pouvant y être raccordée directement, de telle façon que seule l'unité de traitement peut modifier la mémoire non volatile,
- l'unité (CPU) de traitement étant reliée à l'entrée (IN) et à la sortie (OUT) et étant réalisée de telle manière que les données sont transmises de l'entrée à la sortie, qu'il est recherché des séquences de signes de forme prédéterminée et que des parties des séquences de signes de cette forme prédéterminée sont mises en mémoire dans la mémoire non volatile.

2. Dispositif d'enregistrement suivant la revendication 1, les séquences de signes de la forme prédéterminée dont des parties sont mises en mémoire dans la mémoire non volatile consistant de manière prépondérante en des données à mettre en mémoire et l'unité de traitement comportant un moyen pour la conversion de ces séquences de signes avant la sortie par la sortie (OUT), notamment pour une représentation lisible sur le dispositif (14) d'émission de document.

3. Dispositif d'enregistrement suivant la revendication 2, l'unité de traitement comportant un moyen qui inspecte les séquences de signes à transmettre pour savoir si une sortie est produite qui peut être confondue avec une sortie produite lors de la mise en mémoire de données, et, si c'est le cas, bloque la sortie des séquences de signes.

4. Dispositif d'enregistrement suivant l'une des revendications 1 à 3, l'unité de traitement produisant, après qu'un nombre prédéterminé de sorties ont été sorties par l'intermédiaire de la sortie (OUT), mais qu'il n'a pas été effectué de mise en mémoire dans la mémoire (EAROM) non volatile, une sortie supplémentaire sur la sortie (OUT) de telle manière que les sorties effectuées jusqu'ici sont caractérisées comme sorties non enregistrées dans la mémoire non volatile.

5. Procédé d'exploitation d'une unité (12) d'enregistrement en vue de la mise en mémoire permanente de données de reçus à sortir sur un dispositif (14) de sortie de document, l'unité (12) d'enregistrement comportant une entrée (IN), une sortie (OUT) différente de l'entrée et allant au dispositif (14) de sortie de document, une mémoire (EAROM) non volatile et un circuit (CPU) de commande, comportant les caractéristiques :
- le circuit (CPU) de commande reçoit d'une source (10) de données des signes par l'intermédiaire de l'entrée (IN), détermine, parmi trois formes possibles de séquences de signes, la forme à laquelle les signes reçus appartiennent et traite les signes suivant la prescription suivante :
* retransmettre les séquences de signes d'une première forme par l'intermédiaire de la sortie (OUT) ; mais, en plus, une partie de ces séquences de signes est mémorisée dans la mémoire (EAROM) non volatile,
* des séquences de signes d'une deuxième forme dont la sortie sur le dispositif (14) de sortie de document pourrait être confondue avec des sorties provoquées par des séquences de signes de la première forme sont supprimées, donc ne sont pas retransmises par l'intermédiaire de la sortie (OUT) au dispositif (14) de sortie de document ou sont rendues méconnaissables, donc modifiées au point qu'elles ne peuvent plus être confondues ;
* toutes les autres séquences de signes sont retransmises sans changement.

6. Procédé d'exploitation suivant la revendication 5, les séquences de signes de la première forme consistant de manière prépondérante en les données à mettre en mémoire et ces données étant préparées par l'unité (12) d'enregistrement suivant des formats prédéterminés, par exemple complétés par du texte fixe, et retransmis à la sortie (OUT) en la forme préparée.

7. Procédé d'exploitation suivant la revendication 5 ou 6, l'unité (12) d'enregistrement produisant après un nombre prédéterminé de sorties successives d'autres séquences de signes une sortie qui caractérise les données sorties précédemment comme données non enregistrées.

8. Procédé d'exploitation suivant l'une des revendications 5 à 7, les séquences de signes de la première forme étant interprétées comme ensembles de données et
- plusieurs ensembles de données incluant une transaction,
- une transaction étant commencée par un ensemble de données du premier genre et étant achevée par un ensemble de données du deuxième genre,
- des ensembles de données du troisième genre contenant au moins une champ de données de données à enregistrer,
- des ensembles de données du quatrième genre servant au retrait/annulation de données à enregistrer provenant d'ensembles de données du troisième genre.

9. Procédé d'exploitation suivant la revendication 8, les données à enregistrer n'étant pas mises en mémoire chaque fois individuellement, mais seulement après avoir été réunies, notamment après avoir été additionnées, dès qu'un ensemble de données du deuxième genre est reconnu.

10. Procédé d'exploitation suivant la revendication 9, l'ensemble de données du deuxième genre contenant la réunion à enregistrer et, dans le cas où l'ensemble de données est transmis en ayant un contenu faux, au moins une sortie correspondant à un ensemble de données du quatrième genre étant produite pour le dispositif de sortie de document, si bien que toutes les sorties sont caractérisées sur le dispositif de sortie de document comme données non enregistrées en raison de troisième ensemble de données transmis depuis le dernier premier ensemble de données.

11. Dispositif suivant l'une des revendications 1 à 4, le dispositif (12) d'enregistrement étant raccordé directement, sans câble, au dispositif (14) de sortie de document et le raccordement ayant un verrouillage ou un vissage qui peut être plombé.
